# EUROPEAN PATENT SPECIFICATION

(11) **EP 1 386 899 B1**
(45) Date of publication and mention of the grant of the patent: **13.07.2011**
(21) Application number: 02769557.6
(22) Date of filing: 09.05.2002
(51) Int. Cl.: C06B 29/00, C06B 31/00, C06B 33/00, C06C 9/00, C06D 5/00, B60R 21/26, B60R 22/46

(54) **IGNITING AGENT COMPOSITION, AND IGNITER USING THE IGNITING AGENT COMPOSITION**
ZÜNDMITTELZUSAMMENSETZUNG UND ZÜNDER, BEI DEM DIE ZÜNDMITTELZUSAMMENSETZUNG VERWENDET WIRD
COMPOSITION D'AGENT D'ALLUMAGE, ET ALLUMEUR UTILISANT UNE TELLE COMPOSITION

(30) Priority: 10.05.2001 JP 2001140468
(43) Date of publication of application: 04.02.2004
(73) Proprietor: NIPPON KAYAKU KABUSHIKI KAISHA, Tokyo 102-8172 (JP)
(72) Inventor: MATSUMURA, Yasushi, c/o Himeji Factory of Nippon, Himeji-shi, Hyogo 679-2123 (JP); MAEDA, Shigeru, c/o Himeji Factory of Nippon, Himeji-shi, Hyogo 679-2123 (JP); SATO, Eishi, c/o Himeji Factory of Nippon, Himeji-shi, Hyogo 679-2123 (JP); IKEDA, Kenjiro, c/o Himeji Factory of Nippon, Himeji-shi, Hyogo 679-2123 (JP)
(74) Representative: Wablat, Wolfgang
(86) International application number: PCT/JP2002/004538
(87) International publication number: WO 2002/092539

(56) References cited:
- EP-A- 0 010 487
- WO-A-95/04672
- DE-A1- 3 243 425
- DE-U1- 9 214 205
- JP-A- 6 207 799
- JP-A- 9 227 266
- US-A- 3 257 801
- US-A- 5 542 999
- US-A- 5 565 710
- US-A- 5 672 843
- US-A- 6 096 147
- HIDETSUGU NAKAMURA ET AL.: 'Zirconium oyobi zirconium-kaensosan kalium kongobutsu no kakushu kando' JOURNAL OF THE INDUSTRIAL EXPLOSIVES SOCIETY, JAPAN vol. 51, no. 6, 1990, pages 383 - 389, XP002954473
- CHANG-KUNE CHENG ET AL.: 'Studies on the delay mix of Zr/FE2O3' PROC. 12TH SYMP. EXPLOS. PYROTECH. 1984, pages 1 (5-33) - 12 (5-38), XP002954474

## Description

### TECHNICAL FIELD

The present invention relates to an igniting agent composition for use in a fuse head and an igniter, which comprises a fuse head including an arc wire and the igniting agent composition.

### BACKGROUND ART

Conventionally, with respect to igniters to be attached to a gas generator used for a vehicle restraint holding device such as an automobile-use air bag device and a seat belt pretensioner, those igniters of a current-carrying type have been adopted. The igniter of this type converts electric energy to heat energy through an arc wire so that a fuse head, formed by an igniting agent made from an igniting agent composition and placed in the vicinity of the arc wire, is ignited, and a transfer charge and a gas generating agent are burned by the resulting flame. With respect to the fuse head and the like for use in this current-carrying-type igniter, an igniting agent containing a lead compound, such as trinitroresorcin lead, that is ignited with high sensitivity has been used.

In recent years, in the field of automobile industries, there have been increasing demands for parts that use neither lead nor lead compounds in order to improve the environment and also to ensure safety in production. For this reason, with respect to the igniting agent used for the fuse head and the like, there have been demands for those products containing no lead.

However, in the case where an igniter using an igniting agent, such as a fuse head, made from an igniting agent composition component containing no lead compound is used, upon application of a predetermined current, there is a delay from predetermined time in the ignition of the fuse head, causing a problem of degradation in the igniting capability to ensure the ignition of the transfer charge and resulting in misignition in the worst case. For this reason, when the igniter of this type is applied to a gas generator of an automobile air bag device and a seat belt pretensioner, there might be a delay in expansion and development.

U.S. 6,096,147 A discloses an ignition enhanced gas generant, in which a dry blend igniter composition is applied to a gas generant particle. The fuel may include zirconium and the oxidizer may include basic copper nitrate but no specific combination of both components is disclosed. Furthermore, the respective igniter requires a squib initiator.

An objective of the present invention is to provide an igniting agent that contains no lead compound, and causes neither delay in the ignition time nor degradation in the igniting capability and has improved sensitivity for ignition, and an igniter using the igniting agent.

In order to solve the above-mentioned problems, the inventors of the present invention have studied hard, and found that these problems can be solved by using a material without containing any lead compound, and thus, the present invention has been completed.

### DISCLOSURE OF THE INVENTION

In other words, the present invention relates to:
(1) an igniting agent composition for use in a fuse head, which contains no lead compound and which is used for a gas generator, and is characterized by containing basic copper nitrate in a range of 10-80 weight %, zirconium in a range of 15-90 weight % and a binder component having a content in a range from 1-20 weight %;
(2) the igniting agent composition according to (1), characterized in that the basic copper nitrate forms particles having a 50% average particle size of not more than 20 µm;
(3) the igniting agent composition according to (1), characterized in that the zirconium is a metal powder having a 50% average particle size of not more than 10 µm;
(4) the igniting agent composition according to (1), characterized in that basic copper nitrate has a content of 15 weight % to 70 weight %, zirconium has a content of 20 weight % to 80 weight %, and a binder component has a content of 2 weight % to 15 weight %;
(5) an igniter characterized by comprising a fuse head including an arc wire and the igniting agent composition according to any one of (1) to (4), wherein the fuse head is formed by coating the arc wire with the igniting agent composition; and
(6) the igniter according to (5), which further comprises a coat layer of a vinyl acetate based resin.

### BRIEF DESCRIPTION OF THE DRAWINGS

Fig. 1 is a cross-sectional view that shows an essential portion of a gas generator in which an igniter according to the present invention is used.
Fig. 2 is a view that shows one embodiment of a fuse head structure of the igniter according to the present invention.

### BEST MODE FOR CARRYING OUT THE INVENTION

An igniting agent composition of the present invention contains an oxidizing agent component and a reducing agent component, and contains no lead compound. Here, the lead compound normally refers to an inorganic compound or organic compound that contains lead atoms, lead as a single substance, and the like.

With respect to the component that is used as the igniting agent composition of the present invention, among components conventionally known in the field of igniting agent, those containing no lead compound are used, and thus, the material contains at least basic copper nitrate. Further suitable components can be one or two or more selected from the group consisting of nitrate, basic nitrate, metal oxide, metal hydroxide, basic carbonate, perchlorate and chlorate, more preferably, at least one kind or two or more kinds of components selected from the group consisting of basic zinc nitrate, basic cobalt nitrate, basic copper nitrate, copper oxide, copper nitrate, copper hydroxide and basic copper carbonate. In general, these compounds serve as oxidizing agents.

Moreover, with respect to the component that can be used as the igniting agent composition of the present invention for use as a fuse head, among components conventionally known in the field of igniting agent, those containing no lead compound are used, and thus, the material contains at least basic copper nitrate. Further suitable components can be one or two or more selected from the group consisting of nitrate, basic nitrate, metal oxide, metal hydroxide, basic carbonate, perchlorate and chlorate, more preferably, at least one kind or two or more kinds of components selected from the group consisting of basic zinc nitrate, basic cobalt nitrate, basic copper nitrate, copper oxide, coppernitrate, copper hydroxide, basic copper carbonate, perchlorate (potassium salt, sodium salt, etc.) and chlorate (potassium salt, sodium salt, etc.). In general, these compounds serve as oxidizing agents.

Moreover, the average particle size of the basic copper nitrate, i.e. the oxidizing agent component, which gives effects to the ignition time of the igniter, is preferably set to not more than 20 µm in the 50% average particle size, more preferably, not more than 10 µm.

Furthermore, the oxidizing agent component normally has a content in a range of 10 to 80 weight %, more preferably, 15 to 70 weight % in the igniting agent composition.

Here, although not particularly limited as long as it can serve as a reducing agent in combination with the above-mentioned oxidizing agent component, the metal powder is zirconium. Further suitable metal powders may be selected from those known as reducing agent components in the igniting agent field as long as it contains no lead compound; and the metal powder can further include one kind or two or more kinds of materials selected from the group consisting of aluminum, magnesium, magnalium, titanium, titanium hydride, iron, tungsten and boron.

Moreover, the average particle size of the zirconium, i.e. the reducing agent component, which gives effects to the ignition time of the igniter, is preferably set to not more than 10 µm in the 50% average particle size, more preferably, not more than 5 µm.

The reducing agent component normally has a content in a range of 15 to 90 weight %, more preferably, 20 to 80 weight % in the igniting agent composition.

An additive is a binder. With respect to the binder, examples thereof include nitrocellulose, carboxyl methyl cellulose, cellulose acetate, cellulose acetate butyrate, Biton rubber, GAP (Glycidyl Azide Polymer), polyvinyl acetate and silicon-based binder, and polyvinyl acetate is preferably used.

The binder is normally set to have a content in a range of 1 to 20 weight %, more preferably, 2 to 15 weight % in the igniting agent composition. The kind and amount of the binder give great effects to processes of manufacturing the fuse head and weather-resistant properties required for the gas generator. Not limited to one kind of binder, two or more kinds of binders may be used in a mixed manner. The binder is added so as to prevent the fuse head from adhering and fixing to the arc wire and pins as well as from separating therefrom, and also toprevent damages to the fuse head. An excessive amount of the binder makes it difficult to dip the fuse head, failing to provide desired ignition properties. In contrast, an insufficient amount of the binder makes the fuse head less resistant to severe environmental conditions that are imposed on the gas generator in which the igniter is installed, causing damages to the fuse head and the resulting malfunction in the gas generator.

With respect to a preferable combination of igniting agent components of the present invention, basic copper nitrate is set to a content of 15 weight % to 70 weight %, zirconium is set to a content of 20 weight % to 80 weight %, and the binder component is set to a content of 2 weight % to 15 weight %.

Further, the igniting agent composition of the present invention can be obtained by mixing the above-mentioned oxidizing agent and reducing agent as well as an additive.

The igniting agent composition is prepared as described above, and applied to an igniter in which a fuse head is used.

In the case where an igniter is manufactured by using the igniting agent composition of the present invention, for example, the igniting agent composition is first formed into a slurry state, and an arc wire is dipped into this slurry a predetermined number of times so that the igniting agent forms a predetermined thickness, and this is dried and solidified to forma fuse head, and this ball is inserted into a cup containing an transfer charge to form an igniter.

When the igniting agent compound is formed into the slurry, a solvent is preferably used, and with respect to the solvent, examples thereof include acetic acid esters (for example, ethyl acetate, isoamyl acetate and isobutyl acetate) or acetone and the like. Here, the amount thereof is appropriately set so as to form a slurry that is suitable for the dipping process, and it is normally set to 50 to 150 parts by weight, morepreferably, 80 to 120 parts by weight, with respect to 100 parts by weight of the igniting agent composition.

Moreover, the igniting agent composition of the present invention may also be applied to a glass hermetic-type igniter in which the arc wire is placed on a plug made of glass. In this case, the arc wire on the glass plug is coated with the slurry of the igniting agent composition layer by layer so that a fuse head is formed. Furthermore, it is also applied to an igniter and the like, for example, shown in Fig. 3 of Japanese Utility Model Application No. 10-8167.

Referring to Figures, the following description will discuss an igniter in accordance with one embodiment of the present invention.

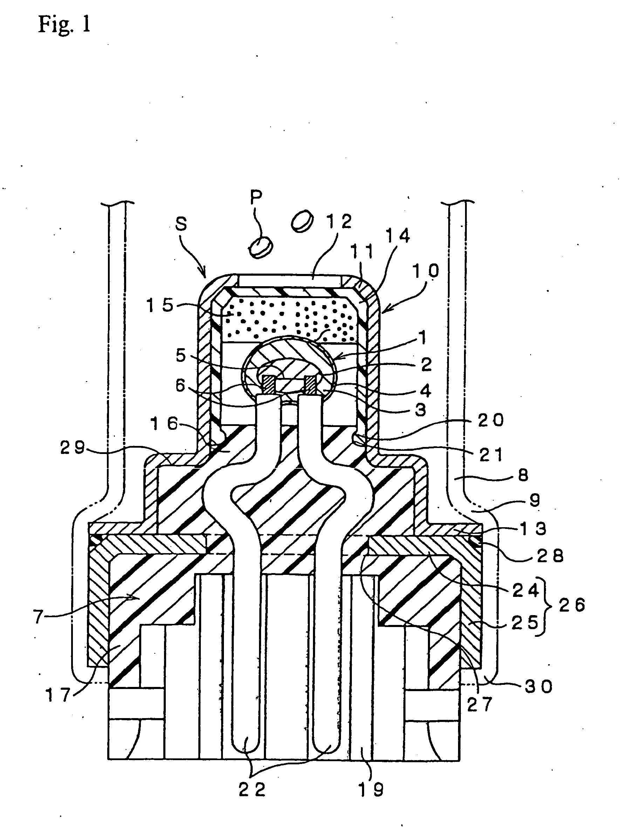

Fig. 1 shows one embodiment of an igniter S according to the present invention. In Fig. 1, the igniter S, which is placed inside a cup body 8 indicated by a two-dot chain line in the Figure, is used for a seat belt pretensioner, an air bag device and the like in an automobile.

The igniter S is constituted by a tube member 10 having a fitting cylinder portion that is formed into a cup shape by using a metal material such as stainless steel, aluminum and iron, etc. The opening side of the tube member 10 is formed into a shape with steps, which is expanded in its diameter toward the cup bottom 11, and a fuse hole 12 is formed in the cup bottom 11 with an opening inside the cup body 8. Further, a flange 13, which forms a protruding portion that projects to the inside of the portion with steps 9 of the cup body 8, is formed. The flange 13 is made in contact with the inside of the portion with steps 9 of the cup body 8 to define a combustion chamber for a gas generating agent P in combination with the cup body 8. A cup member 14 of the igniter S is inserted into the tube member 10 so that the fuse hole 12 is closed by the cup member 14. An transfer charge 15 is housed in the cup member 14 inside the tube member 10.

A plug 7 is formed into a shape with steps, which includes a plug main body 17 and a shaft body 16 that is narrowed in its diameter with two steps from the plug main body 17, and fitted to the opening side of the tube member 10. A plug-use attaching hole 19 which has an opening on the side opposite to the shaft body 16 is formed in the plug main body 17. An attaching groove 21 to which a protrusion 20 placed on the opening side is fitted is formed on the tip of the shaft body 16. The plug 7 is molded by injecting a material prepared by allowing resin, such as polybutylene terephthalate, polyethylene terephthalate, nylon 6, nylon 66, polyphenylene sulfide and polyphenylene oxide, to contain glass fiber and the like into a mold (not shown).

Moreover, respective electrode pins 22 of the igniter S and a reinforcing member 26 are integrally formed on the plug 7. Upon injecting resin into the above-mentioned mold, the respective electrode pins 22 and the reinforcing member 26 are insert-molded to be integrally formed in the resin of the plug 7.

The respective electrode pins 22 are placed at the axial center of the plug 7 in parallel with each other, and allowed to penetrate the shaft body 16 of the plug 7. Further, each of the electrode pins 22 has a curved shape inside the shaft body 16, and is allowed to project in the attaching hole 19 of the plug main body 17 and inside the cup member 14. The respective electrode pins 22 are made of a conductive material such as stainless steel, an iron-nickel alloy and the like, and electrically insulated from each other by the resin of the plug 7. Moreover, with respect to the electrode pins 22, in the cup member 14, an arc wire 5 is fused and secured to a steel portion 6 at the tip of each of the electrode pins 22 through soldering or the like.

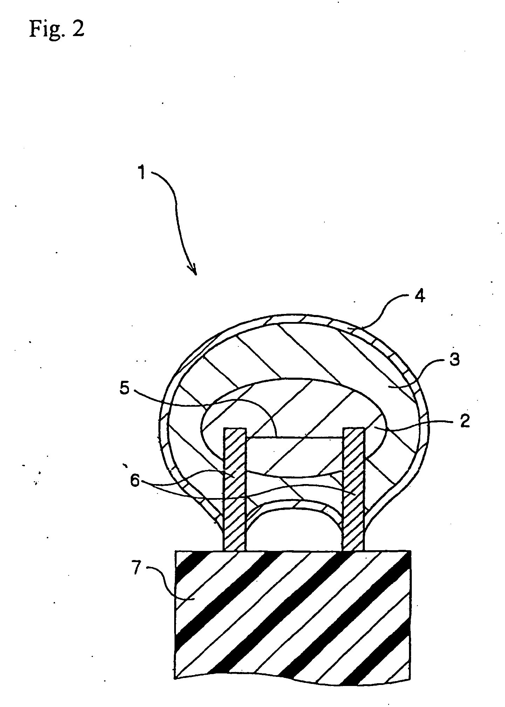

As shown in Fig. 2, the fuse head 1 is made by forming igniting agent layers 2, 3 on the surface of the arc wire 5 made of, for example, a nichrome wire. Moreover, a coat layer is formed on the surface of these igniting agent layers 2, 3.

Each of the igniting agent layers 2, 3, that constitutes the fuse head 1 is formed as follows: a solvent is added to an igniting agent composition which is composed of an oxidizing agent component, a reducing agent component and an additive that is added on demand, and which contains no lead compound, to form a slurry, and the surface of the arc wire 5 is coated with this igniting agent in the slurry state with a predetermined thickness through dipping processes of a plurality of times so that the igniting agent is dried and solidified thereon. Here, Figs. 1 and 2 shows two layers of the igniting agent layers; however, only one layer may be used, or three or more layers may be used on demand.

After the igniting agent layers 2, 3 have been dried and solidified, the surface is coated with a vinyl-acetate-based resin or the like by using a solvent so that a coat layer 4 is formed thereon. This coat layer 4 prevents the igniting agent layers 2, 3 from separating from the surface of the arc wire 5. In this manner, the igniting agent composition is formed into the fuse head 1 so that it becomes possible to obtain the same performances as the fuse head using an igniting agent containing a lead compound.

As also shown Fig. 1, the reinforcing member 26, which is constituted by a metal material such as stainless and SPCC (Steel Plate Cold Commercial) and a reinforced plastic made from a thermosetting resin or the like, is formed into a cup shape with a cylinder member 25 forming the protruding portion and a ring-shaped plate member 24. The cylinder member 25 extends toward the opening side of the attaching hole 19 along the outer circumference of the plug main body 17. The ring-shaped plate member 24 is placed between the plug main body 17 and the shaft body 16, and aligned in a direction orthogonal to the respective electrode pins 22. The ring-shaped plate member 24 is partially exposed from the plug 7 on the outer circumferential side, and integrally formed into the resin of the plug 7 on the inner circumferential side. Moreover, the portion, partially exposed from the plug 7 of the ring-shaped plate member 24 is allowed to form a protruding portion together with the cylinder member 25. Thus, the reinforcing member 26 allows the respective electrode pins 22 to penetrate the ring-shaped plate member 24 through inner circumferential holes 27 formed therein.

The gas generator having the above-mentioned arrangement is manufactured, for example, in the following sequence of processes.

First, the plug 7 is molded by using resin, and simultaneously with this molding process, the respective electrode pins 22 and the reinforcing member 26 of the igniter S are insert-molded so as to be integrally formed with the resin of the plug 7. Successively, the arc wire 5 is fused and bonded between the steel portions 6 at the tips of the respective electrode pins 22 of the plug 7. The surface of the arc wire 5 is coated with the above-mentioned igniting agent layers 2, 3 and coat layer 4 respectively through dipping processes, and these layers are dried and solidified to form the fuse head 1. The shaft member 16 of the plug 7 on which the fuse head 1 has been formed is fitted to the cup member in which the transfer charge 15 is housed so that the igniter S is integrally formed with the plug 7.

Subsequently, a seal ring 28 is attached onto the reinforcing member 26 of the plug 7. This seal ring 28 is placed on the periphery of the cylinder member 25 of the reinforcing member 26. The plug 7 is then fitted into the tube member 10 from the cup member 14 side of the igniter S. At this time, the cup member 14 is inserted to come into contact with the cup bottom 11 of the tube member 10 so that the fuse hole 12 of the tube member 10 is closed. Further, the shaft member 16 of the plug 7 is fitted to the opening side in the tube member 10, and inserted to come into contact with the portion with steps 29 of the tube member 10 so that the flange 13 of the tube member 10 is made in contact with the ring-shaped plate member 24 and the seal ring 28. Thus, the tube member 10 is assembled onto the plug 7.

Next, the plug 7 having the tube member 10 assembled thereon is fitted into the cup member 8 from the cup member 14 side of the igniter S so that a gas generator is assembled. In this case, the cylinder member 25 of the reinforcing member 26 is fitted to the opening side in the cup member 8, and the plug 7 is inserted until the flange 13 of the tube member 10 has come into contact with the inside of the portion with steps 9 of the cup body 8. Thus, the tube member 10 and the cup member 8 are allowed to forma combustion chamber. Moreover, the flange 13 of the tube member 10 is placed between the portion with steps 9 of the cup member 8 and the ring-shaped plate member 24. In other words, the portion with steps 9 of the cup member 8, the flange 13 of the tube member 2 and the ring-shaped plate member 24 are placed in this order from the cup bottom side of the cup member 8, and thus, these members 9, 13 and 24 are made in contact with each other.

In this state, the opening edge of the cup member 8 is bent toward the plug side 7, and this bent portion 30 and the portion with steps 9 are caulked toward the cylinder member 25 of the reinforcing member 26. Consequently, the portion with steps 9 and the flange 13 of the tube member 10 are pressed onto the ring-shaped plate member 24 by the caulking force so that the seal ring 28 is also deformed to carry out a sealing operation in combination with the cup body 8, the tube member 10 and the ring-shaped plate member 24. In other words, the plug 7 is sealed by the ring-shaped plate member 24 in combination with the cup member 8 and the tube body 10. In this case, even when the caulking force is exerted on the plug through the flange 13 of the tube member 10, the ring-shaped plate member 24 of the reinforcing member 26 prevents the plug 7 from being deformed.

In this gas generator, upon application of a current to each of the electrode pins 22 of the igniter S, the heated arc wire 5 ignites the igniting agent layers 2, 3 in succession so that the transfer charge 15 is ignited. The flame caused by the ignition of the igniter S is discharged into the cup body 8 so that the gas generating agent P is ignited and burned by the flame, and thus, a great amount of gas is generated and directed into the seat belt pretensioner. Consequently, the seat belt pretensioner is activated by the high-pressure gas to fasten the seat belt.

As described above, the igniter S of the present invention is preferably attached to the inside of the gas generator that is preferably used in the seat belt pretensioner, and used therein.

Here, not limited to the gas generator for use in the seat belt pretensioner, the fuse head of the present invention can be applied to any field in which an electric igniter is used, such as another type of gas generator for use in an automobile air bag device. Moreover, Fig. 1 has exemplified a case in which the plug is made from resin; however, in addition to the igniter in which the plug is sealed by glass, the igniting agent composition of the present invention may be applied to any igniter as long as it can use a fuse head, so as to form the igniter of the present invention.

### EXAMPLES

The present invention will be described in detail with referring to examples below.

### Example 1

40 parts by mass of basic copper nitrate, 60 parts by mass of zirconium and 5 parts by mass of nitrocellulose dissolved in 100 parts by mass of isoamyl acetate were mixed. This mixture was applied onto the surface of an arc wire, and dried and solidified thereon to form an igniting agent layer, and this surface was coated with vinyl acetate based resin (made by Eastman Chemicals Ltd.) to form a coat layer so that a fuse head was prepared, and a plug was fitted to a cup containing an transfer charge to form an igniter.

### Example 2

50 parts by mass of basic copper nitrate, 50 parts by mass of zirconium and 5 parts by mass of nitrocellulose dissolved in 100 parts by mass of isoamyl acetate were mixed. This mixture was applied onto the surface of an arc wire, and dried and solidified thereon to form an igniting agent layer, and this surface was coated with vinyl acetate based resin (made by Eastman Chemicals Ltd.) to form a coat layer so that a fuse head was prepared, and a plug was fitted to a cup containing an transfer charge to form an igniter.

### Example 3

50 parts by mass of basic copper nitrate, 50 parts by mass of zirconium and 5 parts by mass of polyvinyl acetate dissolved in 100 parts by mass of isoamyl acetate were mixed. This mixture was applied onto the surface of an arc wire, and dried and solidified thereon to form an igniting agent layer, and this surface was coated with vinyl acetate based resin (made by Eastman Chemicals Ltd.) to form a coat layer so that a fuse head was prepared, and a plug was fitted to a cup containing an transfer charge to form an igniter.

### Example 4

50 parts by mass of basic copper nitrate, 50 parts by mass of zirconium and 10 parts by mass of polyvinyl acetate dissolved in 100 parts by mass of isoamyl acetate were mixed. This mixture was applied onto the surface of an arc wire, and dried and solidified thereon to form an igniting agent layer, and this surface was coated with vinyl acetate based resin (made by Eastman Chemicals Ltd.) to form a coat layer so that a fuse head was prepared, and a plug was fitted to a cup containing an transfer charge to form an igniter.

### Comparative Example 1

50 parts by mass of trinitroresorcin lead, 50 parts by mass of potassium perchlorate, 10 mass parts of Biton rubber dissolved in 100 parts by mass of isoamyl acetate were mixed. This mixture was applied onto the surface of an arc wire, and dried and solidified thereon to form an igniting agent layer, and this surface was coated with vinyl acetate based resin (made by Eastman Chemicals Ltd.) to form a coat layer so that a fuse head was prepared, and a plug was fitted to a cup containing an transfer charge to form an igniter.

Igniters described in Examples 1 to 4 and Comparative Example 1 were respectively attached to igniters of gas generators for use in an automobile-use seat belt pretensioner, and a current of 0.8 A was applied thereto so that the time required for the ignition after the current application (ignition time) was measured, and the ignition capabilities were compared. Table 1 shows the results.

**Table 1**

| Composition | Ignition time |
|---|---|
| Example 1 | 1.58 msec |
| Example 2 | 1.68 msec |
| Example 3 | 1.26 msec |
| Example 4 | 1.40 msec |
| Comparative Example 1 | 1.44 msec |

As clearly shown by Table 1, it was found that Examples 1 to 4 had the same ignition capability as Comparative Example 1 using the conventional lead compound (trinitroresorcin lead).

### INDUSTRIAL APPLICABILITY

By using an igniting agent composition in which basic copper nitrate is used (as an oxidizing agent) and zirconium is also used (as a reducing agent), it becomes possible to provide a fuse head that has no lead compound content in an igniting agent layer with an appropriate ignition capability being maintained. Moreover, it is also possible to provide an igniter that uses such a fuse head containing no lead compound, and is applied to an air bag device and a seat belt pretensioner for use in an automobile.

## Claims

1. An igniting agent composition for use in a fuse head, which contains no lead compound and which is used for a gas generator, **characterized by** containing basic copper nitrate in a range of 10 to 80 weight %, zirconium in a range of 15 to 90 weight % and a binder component having a content in a range from 1 to 20 weight%.

2. The igniting agent composition for use in a fuse head according to claim 1, **characterized in that** the basic copper nitrate forms particles having a 50% average particle size of not more than 20 µm.

3. The igniting agent composition for use in a fuse head according to claim 1, **characterized in that** the zirconium is a metal powder having a 50% average particle size of not more than 10 µm.

4. The igniting agent composition for use in a fuse head according to claim 1, **characterized in that** basic copper nitrate has a content of 15 weight % to 70 weight %, zirconium has a content of 20 weight % to 80 weight %, and a binder component has a content of 2 weight % to 15 weight %.

5. An igniter **characterized by** comprising a fuse head including an arc wire and the igniting agent composition according to any one of claims 1-4, wherein the fuse head is formed by coating the arc wire with the igniting agent composition.

6. The igniter according to claim 5, **characterized by** further comprising a coat layer of a vinyl acetate based resin.

## Patentansprüche

1. Zündmittelzusammensetzung zur Verwendung in einem Zündeinsatz, welche keine Bleiverbindung enthält und welche für einen Gasgenerator verwendet wird, **gekennzeichnet dadurch, dass** sie basisches Kupfernitrat in einem Bereich von 10 bis 80 Gewichts-%, Zirkonium in einem Bereich von 15 bis 90 Gewichts-% und ein Bindemittel, das einen Gehalt im Bereich von 1 bis 20 Gewichts-% aufweist, enthält.

2. Zündmittelzusammensetzung zur Verwendung in einem Zündeinsatz nach Anspruch 1, **dadurch gekennzeichnet, dass** das basische Kupfernitrat Teilchen bildet, die eine 50% mittlere Teilchengröße von nicht mehr als 20 µm aufweisen.

3. Zündmittelzusammensetzung zur Verwendung in einem Zündeinsatz nach Anspruch 1, **dadurch gekennzeichnet, dass** das Zirkonium ein Metallpulver ist, welches eine 50% mittlere Teilchengröße von nicht mehr als 10 µm aufweist.

4. Zündmittelzusammensetzung zur Verwendung in einem Zündeinsatz nach Anspruch 1, **dadurch gekennzeichnet, dass** das basische Kupfernitrat einen Gehalt von 15 Gewichts-% bis 70 Gewichts-%, Zirkonium einen Gehalt von 20 Gewichts-% bis 80 Gewichts-%, und ein Bindemittel einen Gehalt von 2 Gewichts-% bis 15 Gewichts-% aufweist.

5. Zünder, **dadurch gekennzeichnet, dass** er einen Zündeinsatz umfasst, enthaltend einen Bogendraht und die Zündmittelzusammensetzung nach einem der Ansprüche 1-4, wobei der Zündeinsatz durch Beschichten des Bogendrahtes mit der Zündmittelzusammensetzung ausgebildet ist.

6. Zünder nach Anspruch 5, **dadurch gekennzeichnet, dass** er desweiteren eine Schicht aus einem Vinylacetat-basiertem Harz umfasst.

## Revendications

1. Composition d'agent d'allumage pour une utilisation dans une tête de détonateur, qui ne comprend pas de composé à base de plomb et qui est utilisée pour un générateur à gaz, **caractérisée en ce qu'**elle contient du nitrate de cuivre basique à raison de 10 à 80 % en poids, du zirconium à raison de 15 à 90 % en poids et un composant liant ayant une teneur comprise dans la plage allant de 1 à 20 % en poids.

2. Composition d'agent d'allumage pour une utilisation dans une tête de détonateur selon la revendication 1, **caractérisée en ce que** le nitrate de cuivre basique forme des particules ayant une granulométrie moyenne à 50 % inférieure à 20 µm.

3. Composition d'agent d'allumage pour une utilisation dans une tête de détonateur selon la revendication 1, **caractérisée en ce que** le zirconium est une poudre métallique ayant une granulométrie moyenne à 50 % inférieure à 10 µm.

4. Composition d'agent d'allumage pour une utilisation dans une tête de détonateur selon la revendication 1, **caractérisée en ce que** le nitrate de cuivre basique a une teneur de 15 % en poids à 70 % en poids, le zirconium a une teneur de 20 % en poids à 80 % en poids et un composant liant a une teneur de 2 % en poids à 15 % en poids.

5. Dispositif d'allumage **caractérisé en ce qu'**il comprend une tête de détonateur comprenant un fil à l'arc et la composition d'agent d'allumage selon l'une quelconque des revendications 1 à 4, dans lequel la tête de détonateur est formée par enrobage du fil à l'arc avec la composition d'agent d'allumage.

6. Dispositif d'allumage selon la revendication 5, **caractérisé en ce qu'**il comprend en outre une couche d'enrobage d'une résine à base d'acétate de vinyle.
